# EUROPÄISCHE PATENTSCHRIFT

(11) **EP 1 868 860 B1**
(45) Veröffentlichungstag und Bekanntmachung des Hinweises auf die Patenterteilung: **14.04.2010**
(21) Anmeldenummer: 06708192.7
(22) Anmeldetag: 10.02.2006
(51) Int. Cl.: B60S 1/40, B60S 1/38

(54) **VORRICHTUNG ZUM GELENKIGEN VERBINDEN EINES WISCHBLATTS MIT EINEM WISCHARM EINES SCHEIBENWISCHERS**
DEVICE FOR THE PIVOTING CONNECTION OF A WIPER BLADE TO A WIPER ARM OF A WINDSCREEN WIPER
DISPOSITIF POUR RELIER DE FAÇON ARTICULEE UN BALAI D'ESSUIE-GLACE A UN BRAS D'ESSUIE-GLACE

(30) Priorität: 08.04.2005 DE 102005016486
(43) Veröffentlichungstag der Anmeldung: 26.12.2007
(73) Patentinhaber: ROBERT BOSCH GMBH, 70442 Stuttgart (DE)
(72) Erfinder: WILMS, Christian, B-3582 Koersel-Beringen (BE); WINDMOLDERS, Eric, B-3510 Kermt (BE); BEELEN, Hans, B-3540 Herk De Stad (BE); VAN BAELEN, David, B-3020 Herent (BE)
(86) Internationale Anmeldenummer: PCT/EP2006/050850
(87) Internationale Veröffentlichungsnummer: WO 2006/106006

(56) Entgegenhaltungen:
- WO-A-02/40328
- WO-A-2004/098962

## Beschreibung

### Stand der Technik

Die Erfindung geht von einer Vorrichtung zum gelenkigen Verbinden eines Wischblatts mit einem Wischarm eines Scheiben wischers nach dem Oberbegriff des Anspruchs 1 aus.

Aus der WO 02/40328 A1 ist eine derartige Vorrichtung bekannt. Sie umfasst ein Anschlusselement in Form einer Blechkralle, einen Adapter aus Kunststoff und ein mit dem Wischarm fest verbundenes Verbindungselement. Das Anschlusselement ist an einem Tragelement des Wischblatts in Form zweier parallel verlaufender Federschienen mittels Krallen und/oder durch Schweißen befestigt. Es besitzt ein u-förmiges Querschnittprofil, wobei ausgehend von einem dem Tragelement benachbarten Bodenteil Seitenwände etwa um 90° von dem Tragelement weggebogen sind. In den Seitenwänden sind Öffnungen vorgesehen, in die ein Lagerbolzen drehfest eingesetzt ist. Auf diesem ist der Adapter, der zwischen den Seitenwänden des Anschlusselements seitlich geführt ist, mit einer Nabe schwenkbar gelagert. Der Adapter besitzt Rastmittel und Haltemittel, mit denen er in das zum Wischblatt hin offene Profil des Verbindungselements eingeklippst ist. In der montierten Stellung übergreift das Verbindungselement sowohl den Adapter als auch die Seitenwände des Anschlusselements von außen her. Bei einer Relativbewegung zwischen dem Wischarm und dem Wischblatt während eines Wischvorgangs kann es zwischen der Innenseite des Verbindungselements und der Außenseite des Anschlusselements zu Berührungen kommen. Da diese beiden Teile in der Regel aus Metall gefertigt sind, entsteht hierbei eine erhöhte Reibung, wodurch außerdem der Korrosionsschutz beschädigt werden kann.

Eine ähnliche Vorrichtung zum gelenkigen Verbinden eines Wischblatts mit einem Wischarm ist Gegenstand einer älteren Patentanmeldung DE 103 47 637.7. Hierbei besitzt das Anschlusselement in Form einer Blechkralle einen mittleren Längssteg, der vom Tragelement des Wischblatts weg weist, und in den eine quer verlaufende Schwenkachse drehfest eingesetzt ist. Auf der zu beiden Seiten des Längsstegs fliegend vorstehenden Schwenkachse ist der Adapter mit Lageröffnungen schwenkbar gelagert, die in seitlichen Federzungen angeordnet sind. Der Adapter, der aus Kunststoff gefertigt ist, umfasst die Blechkralle von außen und wird mittels Rastelementen und Halteelementen in das zum Wischblatt hin offene Verbindungselement eingeklippst, das fest mit dem Wischarm verbunden ist. Der Adapter ist zum einen durch innere Führungsstege seitlich auf der Blechkralle geführt und zum anderen an seinen Seitenwänden spielfrei im Verbindungselement eingesetzt. Somit entkoppelt der Adapter aus Kunststoff das Verbindungselement vom Anschlusselement, wodurch eine gute Korrosionsbeständigkeit und geringe Reibungsverluste gewährleistet sind.

### Vorteile der Erfindung

Nach der Erfindung überdeckt ein Teil der Seitenwände des Adapters die Seitenwände des Anschlusselements von außen, während ein anderer Teil der Seitenwände nach innen versetzt die Seitenwände des Anschlusselements von innen überdeckt. Bei der erfindungsgemäßen Vorrichtung wird bei einem sehr formsteifen Anschlusselement erreicht, dass der Adapter aus Kunststoff das Anschlusselement, das in der Regel als Blechkralle am Wischblatt befestigt ist, von dem Verbindungselement, das üblicherweise aus Metall besteht und mit dem Wischarm fest verbunden ist, entkoppelt, sodass die Gleitreibung zwischen den sich während einer Wischbewegung relativ zueinander bewegenden Teile gering und die Gefahr einer Korrosion der Metallteile ebenfalls verringert ist.

Gemäß einer Ausgestaltung der Erfindung sind die äußeren Seitenwände des Adapters nahe den Stirnseiten angeordnet, sodass sich eine große Abstützbasis des Adapters gegenüber dem Verbindungselement des Wischarms und eine präzise Führung des Wischblatts ergeben. Ferner besitzen die äußeren Seitenwände an jeder Längsseite eine Lageröffnung, die auf einem nach außen vorstehenden Bolzenkopf des Lagerbolzens gelagert ist. Die Seitenwände sind in dem Bereich der Lageröffnung so weit nach außen elastisch nachgiebig, dass die Lageröffnung bei der Montage über den Bolzenkopf geklippst werden kann. Zusätzlich ist es für die Lagerung des Adapters am Anschlusselement vorteilhaft, wenn der Adapter eine zum Lagerbolzen hin offene Nabe besitzt, die bei der Montage auf den Lagerbolzen geklippst wird.

Nach einer weiteren Ausgestaltung der Erfindung besitzen die inneren Seitenwände nach innen nachgiebige Rastelemente. Diese sind in Längsrichtung des Adapters gesehen zwischen den in der Nähe der Stirnseiten angeordneten äußeren Seitenwänden angeordnet und greifen durch einen Durchbruch zwischen den Seitenwänden des Anschlusselements. Sie wirken mit Halteelementen an den Seitenwänden des Verbindungselements zusammen. Außerdem kann der Adapter an seiner Deckwand eine Federzunge mit einer Taste aufweisen, die im montierten Zustand in eine Öffnung in einer Deckwand des Verbindungselements eingreift. Dadurch wird der Adapter in Längsrichtung relativ zum Verbindungselement gesichert.

Die Seitenwände einer Längsseite des Anschlusselements stützen sich über den Lagerbolzen der gegenüberliegenden Seitenwand ab. Um die Formsteifigkeit des Anschlusselements zu erhöhen, ist es zweckmäßig, dass seine Seitenwände an ihre dem Wischarm zugewandten Seite nach innen abgewinkelt sind und eine Stirnwand bilden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

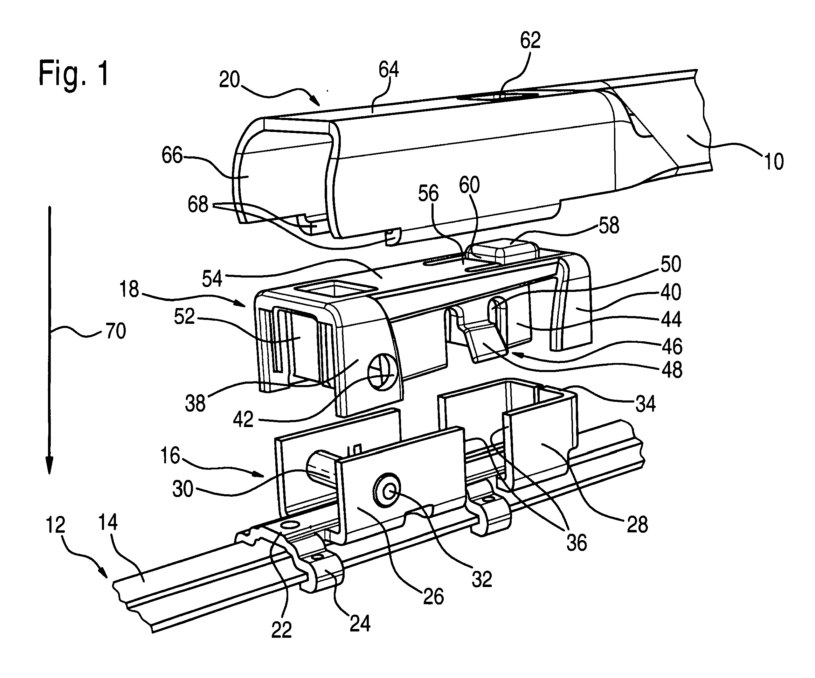

Fig. 1 eine erfindungsgemäße Vorrichtung in einer Explosionsdarstellung und
Fig. 2 eine erfindungsgemäße Vorrichtung in einer perspektivischen Darstellung während einer Demontage des Wischblatts.

### Beschreibung des Ausführungsbeispiels

Von einem Wischblatt 12 ist nur das Tragelement 14 in Form zweier parallel verlaufender Federschienen dargestellt. Mit diesen ist ein Anschlusselement 16 in Form einer Blechkralle z.B. durch Schweißen und/oder mittels Krallen 24 befestigt. Diese sind an einem Bodenteil 22 seitlich angeformt. Das Anschlusselement 16 hat ein im Wesentlichen u-förmiges Querschnittprofil, wobei an jeder Längsseite ausgehend von dem Bodenteil 22 zwei Seitenwände 26, 28 vom Tragelement 14 weg um etwa 90° umgebogen sind. Zwischen den Seitenwänden 26, 28 einer Längsseite des Anschlusselements 16 ist ein Durchbruch 36 vorgesehen. Die zum freien Ende des Wischblatts 12 weisenden Seitenwände 26 tragen einen Lagerbolzen 30, der mit Lagerköpfen 32 seitlich nach außen über die Seitenwände 26 vorsteht. Die Seitenwände 28 am anderen Ende des Adapters 18 sind am antriebsseitigen Ende um etwa 90° nach innen umgebogen und bilden eine Stirnwand 34.

An dem Anschlusselement 16 ist ein Adapter 18 schwenkbar gelagert. Hierzu dienen Lageröffnungen 42 in äußeren Seitenwänden 38, die die Seitenwände 26 des Anschlusselements 16 teilweise überdecken und bei der Montage so weit elastisch nach außen nachgeben, dass die angeschrägten Bolzenköpfe 32 in die Lageröffnungen 42 einrasten können. Zusätzlich besitzt der Adapter 18 eine zum Lagerbolzen 30 hin offene Nabe 52, die bei der Montage über den Lagerbolzen 30 geklippst wird.

Am anderen Ende besitzt der Adapter 18 an jeder Längsseite eine weitere Seitenwand 40, die die Seitenwand 28 des Anschlusselements 16 außen zumindest teilweise überdeckt. Zwischen den äußeren Seitenwänden 38, 40 verlaufen um die Blechstärke des Anschlusselements 16 nach innen versetzt innere Seitenwände 44, sodass die Seitenwände 26, 28 des Anschlusselements 16 zwischen den Innenseiten 44 und Außenseiten 38, 40 eingebettet sind. Die Innenseitenwände 44 besitzen nach innen nachgiebige Federzungen 46 als Rastelemente, die in Montagerichtung 70 nach außen weisende Schrägen 48 besitzen. Die Federzungen 46 sind durch seitliche Aussparungen 50 von den inneren Seitenwänden 44 teilweise getrennt.

An einer Deckwand 54 des Adapters 18 befindet sich an einer Federzunge 56 eine Taste 58 mit einer Anschlagfläche 60. Die Taste 58 wirkt mit einer Öffnung 62 in einer Deckwand 64 des Verbindungselements 20 zusammen, das fest mit einem Wischarm 10 verbunden ist. Im montierten Zustand sichert die Taste 58 den Adapter 18 in Längsrichtung relativ zum Verbindungselement 20, indem sie sich über die Anschlagfläche 60 am Rand der Öffnung 62 abstützt.

Das Verbindungselement 20 besitzt ein im Wesentlichen u-förmiges Querschnittprofil mit der Deckwand 64 und zwei Seitenwänden 66, an denen zum Adapter 18 hin Halteelemente 68 nach innen angeformt sind, die mit den Federzungen 46 zusammenwirken.

Bei der Montage wird der Adapter in Richtung der Montagerichtung 70 auf das Anschlusselement 16 gedrückt, wobei der Lagerbolzen 30 in die Nabe 52 und die Bolzenköpfe 32 in die Lageröffnungen 42 einrasten. Danach wird das Verbindungselement 20 in Montagerichtung 70 bewegt, wobei die Halteelemente 68 über die Schrägen 48 gleiten und die Federzungen 46 nach innen drücken. In der Endposition verrasten die Federzungen 46 mit den Halteelementen 68. Gleichzeitig dringt die Taste 58 in die Öffnung 62 und sichert somit den Adapter 18 in Längsrichtung relativ zum Verbindungselement 20.

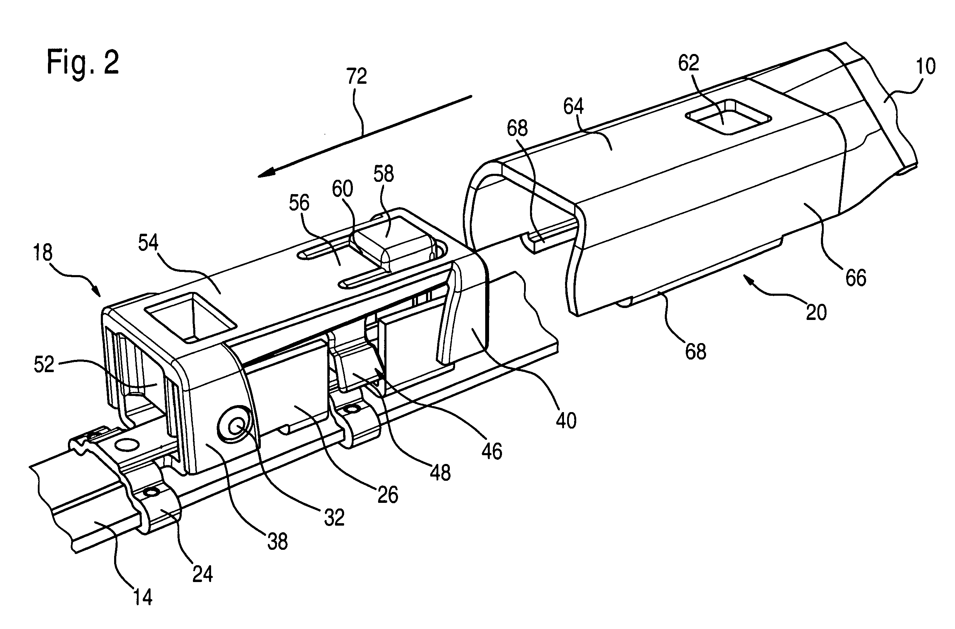

In Fig. 2 ist die Demontage des Wischblatts 12 dargestellt. Nach Betätigen der Taste 58 kann der Adapter 18 mit dem Wischblatt 12 aus dem Verbindungselement 20 gezogen werden, wobei die Federzungen 46 über die Halteelemente 68 gleiten. Selbstverständlich kann der Adapter 18 auch entgegengesetzt zur Demontagerichtung 72 in das Verbindungselement 20 montiert werden. Dabei ist es nicht erforderlich, dass die Federzunge 46 am Adapter nachgiebig ausgebildet ist.

## Patentansprüche

1. Vorrichtung zum gelenkigen Verbinden eines Wischblatts (12) mit einem Wischarm (10) eines Scheibenwischers, die ein mit dem Wischarm (10) fest verbundenes Verbindungselement (20) und ein mit einem Tragelement (14) des Wischblatts (12) fest verbundenes Anschlusselement (16) umfasst, das auf jeder Längsseite ausgehend von einem Bodenteil (22) mindestens eine zum Verbindungselement (20) weisende Seitenwand (26, 28, 44) aufweist, die einen Lagerbolzen (30) tragen, auf der ein Adapter (18) aus Kunststoff schwenkbar gelagert ist, wobei der Adapter (18) in dem zum Anschlusselement (16) hin offenen Profil des Verbindungselements (20) durch Rastelemente (46, 56, 58) und Halteelemente (68, 60, 62) fixiert ist und mit einem Teil (44, 52) in den Raum zwischen den Seitenwänden (26, 28) eingreift, **dadurch gekennzeichnet, dass** ein Teil der Seitenwände (38, 40) des Adapters (18) die Seitenwände (26, 28) des Anschlusselements (16) von außen überdeckt, während ein anderer Teil der Seitenwände (44) nach innen versetzt die Seitenwände (26, 28) des Anschlusselements (16) von innen überdeckt.

2. Vorrichtung nach Anspruch 1, **dadurch gekennzeichnet, dass** die äußeren Seitenwände (38, 40) nahe den Stirnseiten des Adapters (18) angeordnet sind und an jeder Längsseite eine Lageröffnung (42) besitzt, die auf einem nach außen vorstehenden Bolzenkopf (32) des Lagerbolzens (30) gelagert ist.

3. Vorrichtung nach Anspruch 1 oder 2, **dadurch gekennzeichnet, dass** der Adapter (18) eine zum Lagerbolzen (30) hin offene Nabe (52) besitzt, die bei der Montage auf den Lagerbolzen (30) geklippst wird.

4. Vorrichtung nach einem der vorhergehenden Ansprüche, **dadurch gekennzeichnet, dass** die inneren Seitenwände (44) nach innen nachgiebige Rastelemente (46) besitzen, die durch einen Durchbruch (36) zwischen den Seitenwänden (26, 28) des Anschlusselements greifen und mit Halteelementen (68) an den Seitenwänden (66) des Verbindungselements (20) zusammenwirken.

5. Vorrichtung nach einem der vorhergehenden Ansprüche, **dadurch gekennzeichnet, dass** der Adapter (18) an seiner Deckwand (54) eine Federzunge (56) mit einer Taste (58) aufweist, die im montierten Zustand in eine Öffnung (62) in einer Deckwand (64) des Verbindungselements (20) eingreift.

6. Vorrichtung nach einem der vorhergehenden Ansprüche, **dadurch gekennzeichnet, dass** die Seitenwände (28) des An schlusselements (16) an ihrer dem Wischarm (10) zugewandten Seite nach innen abgewickelt sind und eine Stirnwand (34) bilden.

7. Wischblatt (12), mit einer Vorrichtung nach Anspruch 1.

## Claims

1. Device for the articulated connection of a wiper blade (12) to a wiper arm (10) of a windscreen wiper, which device comprises a connecting element (20) fixedly connected to the wiper arm (10) and comprises an attachment element (16) fixedly connected to a supporting element (14) of the wiper blade (12) and which has, extending on each longitudinal side from a base part (22), at least one side wall (26, 28, 44) which points towards the connecting element (20), which side walls (26, 28, 44) support a mounting bolt (30) on which an adapter (18) composed of plastic is pivotably mounted, with the adapter (18) being fixed in the profile, which is open in the direction of the attachment element (16), of the connecting element (20) by means of latching elements (46, 56, 58) and retaining elements (68, 60, 62) and engaging with a part (44, 52) into the space between the side walls (26, 28), **characterized in that** one part of the side walls (38, 40) of the adapter (18) covers the side walls (26, 28) of the attachment element (16) from the outside, while another part of the side walls (44), offset inwards, covers the side walls (26, 28) of the attachment element (16) from the inside.

2. Device according to Claim 1, **characterized in that** the outer side walls (38, 40) are arranged close to the end sides of the adapter (18) and have, on each longitudinal side, a mounting opening (42) which is mounted on an outwardly projecting bolt head (32) of the mounting bolt (30).

3. Device according to Claim 1 or 2, **characterized in that** the adapter (18) has a hub (52) which is open in the direction of the mounting bolt (30) and which is clipped onto the mounting bolt (30) during assembly.

4. Device according to one of the preceding claims, **characterized in that** the inner side walls (44) have latching elements (46) which can flex inwards and which engage through an aperture (36) between the side walls (26, 28) of the attachment element and interact with retaining elements (68) on the side walls (66) of the connecting element (20).

5. Device according to one of the preceding claims, **characterized in that** the adapter (18) has, on its top wall (54), a spring tongue (56) with a button (58) which, in the assembled state, engages into an opening (62) in a top wall (64) of the connecting element (20).

6. Device according to one of the preceding claims, **characterized in that** the side walls (28) of the attachment element (16), at their side facing towards the wiper arm (10), are angled inwards and form an end wall (34).

7. Wiper blade (12) having a device according to Claim 1.

## Revendications

1. Dispositif pour la connexion articulée d'un balai d'essuie-glace (12) à un bras d'essuie-glace (10) d'un essuie-glace, qui comprend un élément de connexion (20) connecté fixement au bras d'essuie-glace (10) et un élément de raccordement (16) connecté fixement à un élément porteur (14) du balai d'essuie-glace (12), qui présente sur chaque côté longitudinal, partant d'une partie de base (22), au moins une paroi latérale (26, 28, 44) tournée vers l'élément de connexion (20), portant un boulon de palier (30), sur laquelle est monté à pivotement un adaptateur (18) en plastique, l'adaptateur (18) étant fixé dans le profilé de l'élément de connexion (20) ouvert vers l'élément de raccordement (16) par des éléments d'encliquetage (46, 56, 58) et des éléments de retenue (68, 60, 62), et venant en prise avec une partie (44, 52) dans l'espace entre les parois latérales (26, 28), **caractérisé en ce qu'**une partie des parois latérales (38, 40) de l'adaptateur (18) recouvre de l'extérieur les parois latérales (26, 28) de l'élément de raccordement (16), tandis qu'une autre partie des parois latérales (44) recouvre de manière décalée vers l'intérieur les parois latérales (26, 28) de l'élément de raccordement (16) depuis l'intérieur.

2. Dispositif selon la revendication 1, **caractérisé en ce que** les parois latérales extérieures (38, 40) sont disposées à proximité des côtés frontaux de l'adaptateur (18) et présentent sur chaque côté longitudinal une ouverture de palier (42), qui est montée sur une tête de boulon (32), saillant vers l'extérieur, du boulon de palier (30).

3. Dispositif selon la revendication 1 ou 2, **caractérisé en ce que** l'adaptateur (18) possède un moyeu (52) ouvert vers le boulon de palier (30), lequel est enclipsé lors du montage sur le boulon de palier (30).

4. Dispositif selon l'une quelconque des revendications précédentes, **caractérisé en ce que** les parois latérales intérieures (44) possèdent des éléments d'encliquetage (46) flexibles vers l'intérieur, qui viennent en prise à travers un orifice (36) entre les parois latérales (26, 28) de l'élément de raccordement et qui coopèrent avec des éléments de retenue (68) sur les parois latérales (66) de l'élément de connexion (20).

5. Dispositif selon l'une quelconque des revendications précédentes, **caractérisé en ce que** l'adaptateur (18) présente sur sa paroi de recouvrement (54) une languette à ressort (56) avec une touche (58), qui vient en prise dans l'état monté dans une ouverture (62) dans une paroi de recouvrement (64) de l'élément de connexion (20).

6. Dispositif selon l'une quelconque des revendications précédentes, **caractérisé en ce que** les parois latérales (28) de l'élément de raccordement (16) sont coudées vers l'intérieur au niveau de leur côté tourné vers le bras d'essuie-glace (10) et forment une paroi frontale (34).

7. Balai d'essuie-glace (12), comprenant un dispositif selon la revendication 1.
